# EUROPEAN PATENT APPLICATION

(11) **EP 4 707 339 A2**
(43) Date of publication of application: **11.03.2026**
(21) Application number: 25203824.5
(22) Date of filing: 14.05.2024
(51) Int. Cl.: C08L 95/00

(54) **BITUMEN-LIKE MATERIAL**

(30) Priority: 15.05.2023 NL 2034820
(62) Divisional of application: 24727516.7
(71) Applicant: Lucobit AG, 50389 Wesseling (DE)
(72) Inventor: Liu, Xueyan, 2600 AA Delft (NL); Lin, Peng, 2600 AA Delft (NL)
(74) Representative: KBN IP Patentanwälte Partnerschaft mbB

(57) **Abstract**

The present invention is in the field of a use of materials as fillers or components for bituminous compositions, in particular characterized by grain distribution. These materials are specially adapted to enhance the bitumen properties. In a first aspect the present invention relates to a bitumen composition, in a second aspect of producing such a composition, and in a third aspect to a road pavement, further comprising asphalt and such a bitumen composition.

## Description

### FIELD OF THE INVENTION

The present invention is in the field of a use of materials as fillers or components for bituminous compositions, in particular characterized by grain distribution. These materials are specially adapted to enhance the bitumen properties. In a first aspect the present invention relates to a bitumen composition, in a second aspect of producing such a composition, and in a third aspect to a road pavement, further comprising asphalt and such a bitumen composition.

### RELATED APPLICATIONS

The present application claims the benefit of priority from Dutch Patent Application NL2034820, filed on May 15, 2023, in the name of Technische Universiteit Delft, The Netherlands.

The entire contents of the above-referenced applications and of all priority documents referenced in the Application Data Sheet filed herewith are hereby incorporated by reference for all purposes.

### BACKGROUND OF THE INVENTION

Asphalt, also known as bitumen, is a sticky, black, and highly viscous liquid or semisolid form of petroleum. It may be found in natural deposits or may be a refined product. Asphalt, as well as polymer modified bitumen (PMB) is often used in road structures. Over time the asphalt/PMB deteriorates and often needs to be replaced consequently. It is acknowledged that in the USA asphalt is defined according to ASTM D8-02, and in Europe according to EN 12597. The present invention relates to a mixture of mineral aggregate and a bituminous binder, according to the European definition.

Bitumen may be considered as a viscoelastic material, typically composed of a complex mixture of hydrocarbons, which are typically produced at the bottom of distillation columns in oil refinery plants. More than 100 million tons are used every year all over the world, mostly in combination with sand, filler, and stones to produce asphalt mixtures for road construction operations. Roads constitute the backbone of having a functional transport network and keeping them in operation and well-maintained is crucial for fomenting economic growth and stability. Bituminous pavements, however, require an immense amount of energy to produce and use. They are also exposed to multiple types of stress, which range from different loading cycles, and weather effects, leading to the deterioration of the material over its service life. Therefore, there has always been a considerable amount of effort invested in improving the performance and durability of asphalt mixtures.

Moreover, recent technological developments and an increased awareness for sustainability have persuaded scientists to develop techniques that utilize alternative waste materials to produce improved and longer lasting bitumens with a reduced environmental impact. Among the most promising material candidates, there is Crumb Rubber (CR), a recycled rubber material produced from automotive and truck scrap tires. Over 1.5 billion tires are currently placed in land fill sites. The tires can be converted to Crumb Rubber (CR).

The use of CR has been shown to improve the performance and durability of conventional bitumens. This is because it has been used to improve the rutting resistance by increasing the bitumen's elasticity. Moreover, it has also been used to improve the fatigue and low-temperature performance of bitumen. CR is also filled with Carbon-black, a crystalline form of Carbon with a remarkably high resistance to ultraviolet light. This means that CR protects conventional bitumen from the detrimental impact of UV light, significantly extending its service life. CR is thus widely available, and its use in bitumen is not only expected to eliminate large tire landfills, but is also known to improve the bitumen's performance, and durability.

However, scientists have only been capable of effectively using at most 22 wt.% of CR in a bitumen mixture. This is because dissolving CR into bitumen is found challenging, and because the addition of CR results in contrasting mechanical properties (i.e., prone to crack or to be overly flexible) depending on how well dissolved CR is in a bitumen mixture. CR may manifest itself in bitumen in two different phases: the undissolved CR (UDCR) and the fully dissolved CR (FDCR) phase. High contents of a UDCR phase typically result in a bitumen with an exceedingly high viscosity, decreasing its workability, and storage stability, and making it impractical for use in pavement operations. Moreover, it is also to segregate over time, resulting in a bituminous mixture that is prone to separate during use.

A high-content UDCR is also known to reduce the adhesive properties of bitumen, resulting in a mixture without effective stone binding properties. Adhesive weakening results in an asphalt whose rocks easily break apart. An FDCR phase is known to have the opposite effect. It substantially decreases the viscosity and improves the workability and compatibility between bitumen and the CR. Currently, Crumb Rubber Modified Bitumen (CRMB) is mostly comprised of a UDCR phase, with just a small fraction of FDCR. This proportion results in often undesirable performance traits, and balancing the proportion of both phases remains a challenging task.

Due to the above disadvantages, the CR content is typically capped to a maximum of 22% by weight. In an ideal case, alternative waste materials could replace the majority (if not all) of the material they are mixed with. Moreover, as mentioned, the formation of two different CR phases results in contrasting mechanical properties. In a case wherein the CR content is beyond 22%, and it is fully dissolved (i.e., 100% of the CR is in an FDCR phase), the material will be too soft and will suffer from rutting and stability at high temperatures.

In another case, if the CR content is beyond 22%, and it is fully undissolved, (i.e., 100% of the CR is in a UDCR phase), then the material will be too viscous and have low workability. Such a high content of a UDCR phase is also known to have a detrimental impact if the environment' s moisture content is too high. Moreover, the UDCR will be prone to separate from the base bitumen, weakening the binding strength of the bitumen, and resulting in a low raveling resistance (i.e., the stones are not held together and separate from the asphalt). Even further, current fabrication methods do not offer control of these phases at different points in time; any modification to one CR phase will inevitably result in the existence of one dominating phase, or in an expected mixture of both. Reaching a balance that successfully uses a high CR content, successfully produces a stable UDCR/FDCR mixture, and meets design criteria is currently very challenging or simply not possible.

In an alternative approach, bitumen may be replaced partly or fully. Among the most promising solutions proposed, there is the concept of building a full alternative to bitumen that should completely replace the need for its conventional counterpart. The concept focuses on finding a list of renewable materials that can be mixed together to form a bitumen-like compound, often referred to as Artificial Bitumen (AB), whose chemical composition is best fully known, and whose performance parameters are best highly tuneable to meet advanced pavement design criteria.

However, until now, there is no alternative available, as this requires several essential, but lengthy steps that have to be carefully performed.

First, scientists need to fully understand bitumen as a material. This means that they must obtain the composition and structure of several bitumen samples, evaluate the principal factors that influence their mechanical and rheological properties, and effectively link how these properties impact the quality, performance, and durability during road pavement applications.

Second, researchers must come up with a list of alternative materials that can successfully replace the main components of conventional bitumen. This involves an extensive search for compounds that are cheap, widely available, renewable, or sustainable in nature, and fit specific chemical, mechanical, and rheological characteristics. This also involves studying whether mixing the selected materials can form a stable mixture, and if the result is effectively equivalent to that of bitumen.

Third, scientists must make sure that the produced material adheres to the standards set by entities in charge of the field application and actual use of the material. This includes making sure that current manufacturing entities can easily produce the new material, evaluating whether the material performs well in road construction operations, and if it does not violate any policy, regulation, or restriction set by the authorities.

Ideally, the use of conventional bitumen should be replaced entirely with other more controllable and renewable materials. However, current research projects are still trying to partially replace bitumen to enhance its properties as needed. The problems encountered by current research projects are the same as those encountered when designing ABs. There are compatibility issues, involving challenges when trying to dissolve the alternate materials into bitumen. There are performance balancing issues. As mentioned earlier, additives can have contrasting performance effects in bituminous mixtures. It is difficult to meet both design criteria using conventional fabrication methods, while also coming up with a material that is inherently stable and safe to use. There are durability issues, where alternative materials can lead to unpredictable and premature material failure. There are also consistency issues.

The availability of consistent alternative materials makes it difficult to design a long-term solution that is entirely dependent on them. Moreover, these materials are well known to vary considerably depending on the source and production method used. For example, many recycled materials used in ABs come from agricultural waste.

The composition of this type of waste varies significantly from region to region and is subject to seasonal variations in supply. Evidently, all these issues are more prevalent when the number of components involved is higher and the shortcomings compound more significantly, making the design and production of a complete AB a very challenging task.

Incidentally, US 5 719 215 A recites an invention which provides a procedure for at least partial dissociation of crumb rubber vulcanate network, including automobile tires, and for the incorporation of this treated rubber into stable bitumen compositions. The at least partially dissociated rubber vulcanate network may be used independently as a bitumen modifier, or a stabilizing agent for ground vulcanate rubber dispersions in bitumen or as a steric stabilizer in dispersion of polyolefins in bitumen. The at least partially dissociated rubber vulcanate network materials are produced in situ in bitumen or produced separately and subsequently incorporated into bitumen and the bituminous compositions are useful materials for a variety of applications. Modifications are possible within the scope of this invention.

WO 2022/035343 A1 recites an invention which relates to the field of road construction materials, and more particularly to the production of bitumen/rubber compositions for a bitumen-based paving binder and can be used for constructing, repairing and reworking asphalt concrete paving, as well as for laying and repairing layers of roadways on bridges and overpasses. A bitumen/rubber composition for a paving binder includes bitumen of grades BND 90/130 or BND 60/90 or 80/100 with a penetration grade of 60-130 on a digital universal electrical measuring instrument; rubber crumb from ground spent automobile tyres, with a particle size of less than 1 mm; mineral oil with a viscosity of 0.005-1.6 Pa*s at 60°C, a density of 0.85-1.04 g/cm3 at 15°C, and a fire point above 225°C; and an essential oil having a boiling point above 210°C and a closed cup flash point above 100°C, in a volume of 1000:1000000. The end product exhibits increased adhesion with the paving, increased resistance to cracking at low temperatures, improved adhesion at a temperature of minus 33°C, and increased elasticity under heavy traffic.

US 2019/256417 A1 recites an engineered crumb rubber asphalt additive which may comprise a plurality of structural particles and a non-elastomeric liquid. At least a portion of the surface of the structural particles is coated with the non-elastomeric liquid. The structural particles may be crumb rubber particles. The engineered crumb rubber asphalt additive may also comprise a reagent. The non-elastomeric liquid may be selected from the group consisting of workability/compaction agents, slipping agents, and anti-stripping agents.

CN 103 113 045 A recites an invention which relates to asphalt concrete and particularly relates to waste plastic modified asphalt concrete. The waste plastic modified asphalt concrete is characterized by comprising rubber particles formed by processing waste plastic, asphalt and single-gradation broken stones which are bent according to a ratio through rubber asphalt processing equipment. The waste plastic modified asphalt concrete has the advantages of making full use of the waste rubber, avoiding wasting of resources, saving cost and simultaneously solving the problems that roads paved by conventional asphalt concrete are easy to age, the conventional asphalt concrete easily results in reflection cracks of road surfaces, and the using function of the road surface is seriously affected by cracking and slurry spurting of the conventional asphalt concrete in a using process.

Currently, producing ABs is significantly more expensive than their conventional counterparts. This has become evident in projects utilizing materials that stem entirely from renewable carbon sources. Meanwhile, unlike other simpler materials, the modelling of conventional bituminous materials (i.e., modelling viscoelastic materials) to produce a reliable representation of their mechanical and rheological response is also an incredibly challenging task. A plethora of different chemical features often spanning over multiple size and time domains make it difficult to apply numerical methods to speed up the testing required to study conventional bitumen.

To use a production facility that involves traditional asphalt, significant effort must be put into the design to produce fairly accurate reaction and processing. The present invention therefore relates to bitumen compositions, methods of producing such, and applications thereof, which solve one or more of the above problems and drawbacks of the prior art, providing reliable results, without jeopardizing functionality and advantages.

### SUMMARY OF THE INVENTION

It is an object of the invention to overcome one or more limitations of the prior art. In this patent application an improved fabrication process is provided to increase the use of CR in bitumen, such as to 50%, in which the content of both FDCR and UDCR phases are increased and carefully controlled, such as in two separate steps, to regulate the material' s mechanical response as needed. Inventors refer to this new bituminous mixture in one alternative as High Content Rubber Modified Bitumen (HCRMB). HCRMBs are found to be stable, have good low and high-temperature performance, and are proven to surpass the performance and durability of conventional base bitumens and other CRMBs. For the present bitumen-like material, a complete, (triple) rejuvenation mechanism as proposed is to reverse the impact of aging by fully restoring chemical and physical integrity of the affected polymeric network and re-establishing the maltenes fraction required to obtain a stable bituminous material; this may be considered a practical example wherein all due care required by the circumstances have been taken in order to re-establish the right of full chemical and physical existence of the present bitumen-like material.

In a first aspect the present invention relates to a bitumen-like material, comprising
- 1.4-3.5 weight parts polymer,
- wherein 1 first weight part of the polymer is dissolved, and in particular selected from polyisoprene, such as rubber, polyethylene, low density polyethylene, polyethylene terephthalate, ethylene vinyl acetate, and combinations thereof, and
- wherein 0,4-2,5 second weight parts of polymer is in particular selected from polyisoprene, such as rubber, polyethylene, low density polyethylene, polyethylene terephthalate, ethylene vinyl acetate, and combinations thereof, and is undissolved and incorporated in the bitumen-like material and
- wherein the second weight part of polymer is in the form of particles, in particular wherein the average particle size of the second weight part of polymer is < 1 mm, in particular from 0.05 to 0.6 mm, more in particular between 0.1 and 0.4 mm, and wherein a standard deviation of the particle size of the second weight part of polymer is 1 mm,
- wherein the bitumen-like material further comprises oil, in particular recycled oil, in particular 1-2.5 weight parts of recycled oil. It is noted that likewise oil from other sources may be used, such as mineral oil.

Said oil is considered technically mostly equivalent to the present recycled oil, but recycled oil is preferred from a green technology point of view. That the polymer each individually is selected from the list given indicates that the first weight part of polymer being dissolved is not necessarily the same in terms of polymer composition as the second weight part of polymer being in the form of particles.

The phrase "weight parts" is used to indicate relative weight amounts of components mentioned. 2 parts of a first component and 1 part of a second component are indicative of the second component being present in twice the weight amount compared to the first component, etc. This may be considered equivalent to a typical kitchen recipe. It is noted that particle size distributions can be described with an inverse-Gaussian approach; typically, particle sizes of <0 do not exist; however, in view of statistics, it has been found that statistical procedures, such as averages, mean, and standard deviation, apply more or less equally well to the inverse Gaussian-distributed particles.

With the term "incorporated" it is meant that the present particles are added into a body or formed into a body, the body being the remainder of the bitumen, such that the particles are united with or worked into the "already" existent bitumen to form an indistinguishable whole, and wherein the particles typically are blended and combined thoroughly therewith. The present bitumen may be a typical bitumen, such as any of various mixtures of hydrocarbons (such as tar) often together, with their non-metallic derivatives that occur naturally, or are obtained as residues after heat-refining natural substances (such as petroleum), or an alternative thereto, such as an artificial bitumen, as is further detailed below.

Another part of the present rubber particles is dissolved in the present bitumen, which is caused to pass into solution, that is, the material of the present rubber particle is partly or fully dissolved in the bitumen, and therewith the particle as such partly or fully disappears, as part or all of the material of the present particle becomes part of the bitumen. Therewith the properties and/or characteristics of the present rubber particle material partly or fully disappear as such and are partly or fully combined with those of the bitumen wherein the particle is dissolved. The size of the particles can be determined using simple measures, such as a sieve or mesh, or a series thereof, typically used in a sequential mode, separating larger particles not capable of going through the sieve from smaller particles being capable of passing through, therewith forming particle fractions with particles with different sizes or size distributions. A size or size distribution may also be determined with an apparatus, such as a laser scattering apparatus, such as a Shimadzu SALD-2300. For the mesh size reference can be made to a standard reference table, such as that of Wikipedia.

In a second aspect the present invention relates to a method of producing a bitumen-like material. In one alternative a challenging mixing procedure is used to fully dissolve CR into bitumen-like material. This present method comprises:
- Providing the polymer, in particular wherein the polymer is selected from polyisoprene, such as rubber, polyethylene, low density polyethylene, polyethylene terephthalate, ethylene vinyl acetate, and combinations thereof, wherein the polymer is in the form of particles, in particular 1 weight part, providing recycled oil, in particular 1-2.5 weight parts, in particular wherein the recycled oil is selected from paper industry oil, rapeseed oil, aromatic oil, such as a synthetic or natural aromatic oil, soybean oil, and combinations thereof;
- Blending the polymer and recycled oil at a temperature of 220-260 °C in a first high shear mixer under a first shear for 0.5-2 hours, therewith forming a single homogeneous phase comprising a substantially fully dissolved polymer in the recycled oil;
- Adding further polymer to the single homogeneous phase in a second high shear mixer during 0.5-2 hours, in particular wherein the polymer is selected from polyisoprene, such as rubber, polyethylene, low density polyethylene, polyethylene terephthalate, ethylene vinyl acetate, and combinations thereof, wherein the further polymer is in the form of particles, in particular 0.4-1.4 weight parts, lowering the temperature to 170-200 °C, during a period of 0.5-2 hours, wherein the further polymer remains substantially undissolved in the phase, therewith forming a fluidic mixture with increased stiffness and high-temperature stability, in particular forming a polymeric network;
- Adding at least one resin to the fluidic mixture, in particular 0.1-0.5 weight parts of at least one resin, and at least one cross linker, in particular 0.005-0.3 weight parts of at least one cross linker, in a third high shear mixer for 0.5-2 hours, maintaining the temperature at 170-200 °C, during a period of 0.5-2 hours, therewith forming an artificial bitumen-like material (AB).

The conditions therein typically involve temperatures ranging from 200-260°C and shearing mixing times of in total 6-8h. Otherwise, typically the CR would remain in the UDCR phase. There are three methods currently used to produce CRMB: the Dry Process, Wet Process, and Terminal Blend Process. In the Dry Process, the CR is blended with the stones and the base bitumen simultaneously for 40-60s. This method has several technical issues, lacks a proper standard, and is known to result in inconsistent performance. This is because the part of the CR expected to interact into the bitumen ends up interacting with the hot stones instead, decreasing its workability considerably.

Moreover, CRMB produced using the Dry Process is known to have ravelling and segregation issues. Therefore, the amount of CR that can be effectively used in this method is much lower than in other methods. In the Wet Process, the CR is incorporated into the base bitumen prior to mixing it with stones. A higher amount of CR can be used, and better interaction exists between the CR and the bulk of the base bitumen. However, the Wet Process is performed at just 180°C, meaning that properly dissolving CR is very difficult. Therefore, in the Wet Process, CR exists only in an UDCR phase. Segregation of the UDCR phase over time is a persistent issue, meaning that the resulting bituminous mixtures built using the Wet Process tend to be unstable.

In the Terminal Blend Process, the CR is fully dissolved into the base bitumen, resulting in a single FDCR phase. This results in a mixture with great stability and in a process whose parameters are easily controllable (i.e., mix until fully dissolved). A CR content of 50% by weight is possible, but the presence of a single FDCR phase significantly decreases the viscosity and stiffness of the mixture, causing serious rutting performance issues. In other words, a high FDCR content results in a very soft, watery bitumen, incapable of holding and distributing loads as expected.

Both CRMB and AB relate to what may be referred to as bitumen binders, which, by themselves, do not include aggregates (fine or coarse). The crosslinking agent is a component of the binder, rather than of a (later formed) asphalt mixture. When a bitumen binder, such as the present one, is combined with aggregates, it is typically called an "asphalt mixture". The binder content in an asphalt mixture typically ranges from 3.5% to 5%, although this range can be expanded to 3-10% or even 1% to 20%. However, higher binder content may not be suitable for asphalt mixtures.

In one embodiment of the present method the production of a HCRMB with a CR content in excess of 22%, typically ranging from 30 to 50% by weight, is achieved.

The present method of producing a high content rubber modified bitumen (HCRMB) comprises:
- Providing the polymer, in particular wherein the polymer is selected from polyisoprene, such as rubber, polyethylene, low density polyethylene, polyethylene terephthalate, ethylene vinyl acetate, and combinations thereof, wherein the polymer is in the form of particles, in particular 1 weight part;
- Providing bitumen-like material, in particular 1-4 weight parts:
- Blending the polymer and bitumen-like material at a temperature of 220-260 °C in a fourth high shear mixer under a fourth shear for 6-8 hours, therewith forming a single homogeneous phase comprising a substantially fully dissolved polymer in bitumen-like material;
- Adding further polymer in a fifth high shear mixer, in particular wherein the polymer is selected from polyisoprene, such as rubber, polyethylene, low density polyethylene, polyethylene terephthalate, ethylene vinyl acetate, and combinations thereof, wherein the polymer is in the form of particles, in particular 0.25-3 weight parts, lowering the temperature to 170-200 °C, during a period of 0.5-2 hours, wherein the further polymer remains substantially undissolved in the phase, therewith forming a HCRMB.

This HCRMB has two independently controlled phases: the FDCR, comprising about two-thirds of the total CR content, and UDCR. This is achieved by separating the fabrication process into two distinct stages. In the first one, CR is blended into the base bitumen using a high shear mixer at 220-260°C for about 6-8h to create a fully dissolved phase. This stage is similar to the technique used in the Terminal Blend Process. This stage is to decrease the viscosity of the base bitumen, raise its fluidity, and improve its workability; the resulting bituminous mixture has improved fatigue and ravelling resistance.

The CR content at this stage usually ranges between 2035%. The second stage involves adding additional CR into the blend produced in the previous stage and lowering the high shear mixing time and temperature to 40-60 min and 180°C. The latter results in the formation of an UDCR phase that is well-dispersed and has had time to absorb part of light fraction of hydrocarbons in present in the bitumen. The compatibility of the UDCR phase with its surroundings is stabilized and therefore, improved. The UDCR phase provides a further increase in overall CR content (e.g. to up to 50%), while increasing the viscosity and reducing rutting issues. With the present method, not only can the CR content be increased to e.g. twice as much, but also the content of each CR phase can be independently controlled to produce stable bitumens that meet complex design criteria by optimizing the ratio of UDCR to FDCR phases in the bitumen mixture, giving it part of the contrasting mechanical properties of each CR phase.

As the price of crumb rubber is generally much lower than that of the base bitumen, increasing the amount of CR in bitumen by a factor of two can result in a 20-30% price reduction over other CRMBs. A further increase in the content of CR in bitumen means that a significant amount of waste rubber can be repurposed for road construction operations. The inevitable accumulation of tire waste (and the lack of use of the aforementioned) can be solved. A higher CR content increases the durability of the bituminous mixture, as CR protects it from detrimental UV radiation. Unlike other novel, sustainable materials, CR has a well-known and consistent chemical composition which facilitates its safe implementation as a construction material.

Moreover, the present fabrication method does not involve the use of highly customized tools or techniques. This is beneficial to businesses already involved in the production of bituminous materials and asphalt concrete, as they do not need to invest a large amount of time or resources to adapt their facilities to the newly developed fabrication method. The present method also does not involve complicated techniques, which allow companies to implement the present method with relative ease. The newly produced CRMB can be immediately put into use in road pavement operations. The present method has no significant trade-offs (often accompanied by projects involving sustainable breakthroughs), while still solving multiple issues at once.

In a further embodiment of the present invention an efficient and easily controllable fabrication process is provided, that can be used to design full alternatives to conventional bitumens.- These do typically comprise no substantial amounts of bitumen, or none at all. In doing so, inventors established a list of potential material components, typically all from 100% recycled sources, to be used in a methodical series of steps that lead to the full control of the composition, structure, and stability of the designed material, meeting the quality and performance of conventional bitumens and showing potential to surpass them. Among these, there is Crumb Rubber (CR), typically a recycled rubber material produced from old tires. CR increases the elasticity of the base bitumen, improving its rutting resistance and high temperature performance. CR not only improves the physical properties of bitumen but also protects it from the detrimental effect of UV light, extending its service life.

However, mixing of only at most 20% by weight of CR with bitumen has been successfully achieved. Lignin, an alternative material, is produced at a rate of 60 million tons every year as a by-product of the papermaking industry, which focuses its interest on cellulose instead. Lignin is often added to bitumen in the form of fibers to increase its viscosity, improving the bitumen's high temperature stability, and reinforcing its structural integrity when required. It is cheap, clean, safe, and widely available, but at most 30% by weight has been effectively mixed with bitumen for road construction operations.

Several types of waste plastics have been tested as additives to bitumen. These include polyethylene (PE), polypropylene (PP), polyethylene terephthalate (PET), low density polyethylene (LDPE), and ethyl vinyl acetate (EVA). These are among the most used polymer plastics there are around today, being both widely available and an environmental concern. Waste plastics increase the elasticity of the bitumen, improving its rutting resistance and some acting as UV light and self-healing agents, improving the durability of bitumen especially against weathering factors. Due to fabrication challenges and storage stability problems, the use of CR has been restrained to a maximum of 8% by weight. Waste oils have also been tested, including both vegetal and mineral oils. They decrease the viscosity of the base bitumen, which aids in restoring old, hardened bitumen back to its original thickness, extending its service life. Mixing up to 30% by weight has been achieved.

Researchers also have tried to use algae materials to prepare 100% bio-binder to replace the conventional bitumen. ABs can immediately replace the use of conventional bitumen, serving as the main binder component in asphalt concrete and other bitumen-related applications, as they are already cheaper than their conventional counterparts. Moreover, the use of conventional bitumens is not being limited only because they are sourced from non-renewable hydrocarbon sources, but also because their chemical composition and structure is hard to control. This translates into companies now having the capacity to design highly complex, but more effective and durable pavements, while also adhering to regulations and policies favoring the environment. Meanwhile, companies and facilities already producing asphalt pavements should not have significant limitations in implementing the method proposed. Companies should be capable of easily producing ABs with relative ease.

The list of ingredients proposed in this patent can be mixed to resemble the chemical composition, structure, and mechanical and rheological response of conventional bitumens, effectively yielding a stable AB, tackling compatibility issues experienced by other researchers. Moreover, in this patent document a systematic fabrication process to successfully produce Abs is provided. This fabrication method has a series of stages specifically designed to independently tune performance criteria according to what is needed, giving full control over the workability, stiffness, and durability required. Balancing contrasting mixture parameters on the AB produced is no longer an issue.

Moreover, the raw materials used in this patent have been studied for decades, thoroughly tested in bituminous mixtures and in many other similar applications. They are widely known to be beneficial to not only bitumen, but essentially to any other hydrocarbon blend. For example, Carbon-black, an active component of CR, hinders the effect of UV radiation and thermal decomposition when mixed with other hydrocarbons. This improves the chemical stability and durability of bituminous materials. These materials are also available worldwide, and their chemical composition is stable and not prone to be varied. Long-term availability is also assured, as these are expected to be produced for decades to come.

Unlike in other AB projects, the use of non-renewable, abundant, and recycled materials makes the fabrication method proposed in this patent to be cost-effective and attractive to projects searching for full alternatives to bitumen. Unlike other proposed methods, the present fabrication process may involve the use of 3 mixing stages (instead of one or two) to control the creation of a stable AB.

In Stage 1, preferably 30-50 wt.% of CR is blended into preferably 50% to 70% wt.% of Recycled Oil at 220-260°C using a high shear mixer for 6-8h. The purpose of Stage 1 is to fully dissolve CR into the recycled oils and create a flexible phase that serves as a liquid medium that supports the solid structure of the artificial bitumen.

In Stage 2, preferably 20-40 by wt.% of the mixture in Stage 1 of Waste Polymer (CR/PE/PP/EVA/PET) is blended into the mixture of Stage 1 at 175°C using a high shear mixer for 90min. The purpose of Stage 2 is to form a solid-like polymer network that gives structural integrity and stiffness to the bitumen.

In Stage 3, preferably 10 wt.% of mixture in Stage 2 of Resin and preferably 1.0 wt.% of mixture in Stage 2 of a Cross-Linker Agent is blended into the mixture of Stage 2 at 175°C using a high shear mixer for 60min. The purpose of adding Resin is to improve the adhesive properties of the AB, while adding the Crosslinking Agent (CLA) ensures that the polymer network formed in Stage 2 is well dispersed and settled. The proportion of the materials used can be tuned to fit the performance criteria required in the resulting AB.

The method provided requires no extensive adaptations to currently available processes, which makes it easily implementable. The cost of the raw materials used in the process is considerably lower than the one of pure conventional bitumen. The use of up to 100% AB not only allows engineers to produce highly tuneable viscoelastic materials for use in pavements, but also for several other applications. These include bitumen shingles for roofing, waterproofing, surfacing, insulating, etc. The research done to achieve stable and effective ABs will also benefit many other projects that have similar objectives (e.g., those looking for partial replacements). The use of widely known materials in the composition of ABs allows scientists and researchers to design ideal ABs for different types of engineering applications.

One of these tests is a segregation test. The test method used is "Bitumen and bituminous binders - Determination of storage stability of modified bitumen EN 13399:2010". In an example the PMB is filled in an aluminum tube and stored in the chamber at 163 degrees for 48 hours. Then the top and the bottom part of the PMB samples were collected to conduct softening point tests. From the present test results, if the recipe includes the resin, the softening point difference is less than 2 degrees, which meets the standard requirement. If the resin was not included in the recipe, the softening point is larger than 4 degrees, which causes a significant decrease of asphalt performance. The above prior art does not provide test results at all to prove this phenomenon.

In a further aspect the present invention relates to the use of the bitumen-like material according to the present invention, for replacing bitumen-based base material as at least one of a basic component for building material and a finished building material.

In a further aspect the present invention relates to a product comprising bitumen-like material according to the invention, wherein the product is selected from a road pavement, a shingle for roofing, a waterproofing, a surfacing material, and an insulating material.

In a further aspect the present invention relates to a road pavement according to the invention, comprising asphalt, in particular 5-30 wt.% bitumen-like material, and 6595 wt.% mineral aggregate.

Advantages of the present description are detailed throughout the description.

### DETAILED DESCRIPTION OF THE INVENTION

In an exemplary embodiment of the present bitumen-like material, the bitumen-like material contains bitumen with a maximum mass fraction of 0.05 and no tar.

In an exemplary embodiment of the present bitumen-like material, the polymer is at least partly recycled polymer, such as 50-100% recycled polymer, in particular recycled from tires, from PE, from LDPE, from EVA, from PET, and combinations thereof, and/or wherein 0.5-2 weight parts of the polymer is incorporated in the bitumen-like material, in particular 0.7-1.5 weight parts, more in particular 1-1.4 weight parts. The embodiment is referred to as High Crumb Rubber Modified Bitumen [HCRMB].

In an exemplary embodiment of the present bitumen-like material, the bitumen-like material further comprises 10-40 weight parts fine aggregate, such as sand, and/or 10-40 weight parts coarse aggregate, in particular selected from stone, such as limestone, basalt, and pebbles.

In an exemplary embodiment the present bitumen-like material further comprises 0.1-0.5 weight parts of at least one resin, and 0.05-0.3 weight parts of at least one cross linker. The embodiment is also referred to as artificial bitumen [AB]. It comprises typically no bitumen, hence "artificial".

In an exemplary embodiment of the present artificial bitumen-like material, the at least one resin is selected from terpene comprising resins, rosins, hydrocarbon resins, such as C₄-C₁₂ resins, preferably C₅-C₁₀ resins, more preferably C₆-C₉ resins, most preferably C₈-C₉ resins, and petroleum derived resins, in particular recycled resins.

In an exemplary embodiment of the present bitumen-like material, the at least one cross-linker is selected from sulphur-comprising compounds, from sulphur, such as nanoparticle sulphur, and from isocyanate.

In an exemplary embodiment of the present artificial bitumen-like material, the recycled oil is selected from paper industry oil, rapeseed oil, aromatic oil, such as synthetic or natural aromatic oil, and soybean oil.

In an exemplary embodiment of the present artificial bitumen-like material, all components of the artificial bitumen-like material are recycled components, apart from the cross-linker.

In an exemplary embodiment of the present method of producing an artificial bitumen-like material, the phase has a viscosity of 0.3-4.0 Pa*S at 180 °C.

In an exemplary embodiment of the present method of producing an artificial bitumen-like material, the first high shear mixer operates at a speed of 400-600 rpm and/or wherein the second high shear mixer operates at a speed of 400-600 rpm and/or wherein the third high shear mixer operates at a speed of 400-600 rpm.

In an exemplary embodiment of the present method of producing a high content polymer modified bitumen-like material, the phase has a viscosity of 0.3-4.0 Pa*sec at 180 °C.

In an exemplary embodiment of the present method of producing a high content polymer modified bitumen-like material, the fourth high shear mixer operates at a speed of 3000-9000 rpm, and/or wherein the fifth high shear mixer operates at a speed of 3000-9000 rpm.

The table below provides ranges for the components of the artificial bitumen (AB) and the High Crumb Rubber Modified Bitumen (HCRMB):

**Table 1: Bitumen-like compositions. FA: Fine Aggregate; CA: Coarse Aggregate.**

| | AB | | HCRMB | |
|---|---|---|---|---|
| | min | max | min | max |
| Polymer | | | | |
| Dissolved | 1 | | | 1 |
| Undissolved | 0,25 | 1,4 | 1 | 2,5 |
| Oil | 1 | | 2,5 | |
| Resin | 0,1 | 0,5 | | |
| Bitumen-like | 0 | 7,5 | 3 | 7,5 |
| FA | 10 | 40 | 10 | 40 |
| CA | 10 | 40 | 10 | 40 |
| Cross-linker | | 0,05 | 0,3 | |

The invention will hereafter be further elucidated through the following examples, which are exemplary and explanatory of nature and are not intended to be considered limiting of the invention. To the person skilled in the art, it may be clear that many variants, being obvious or not, may be conceivable falling within the scope of protection, defined by the present embodiments.

### SUMMARY OF THE FIGURES

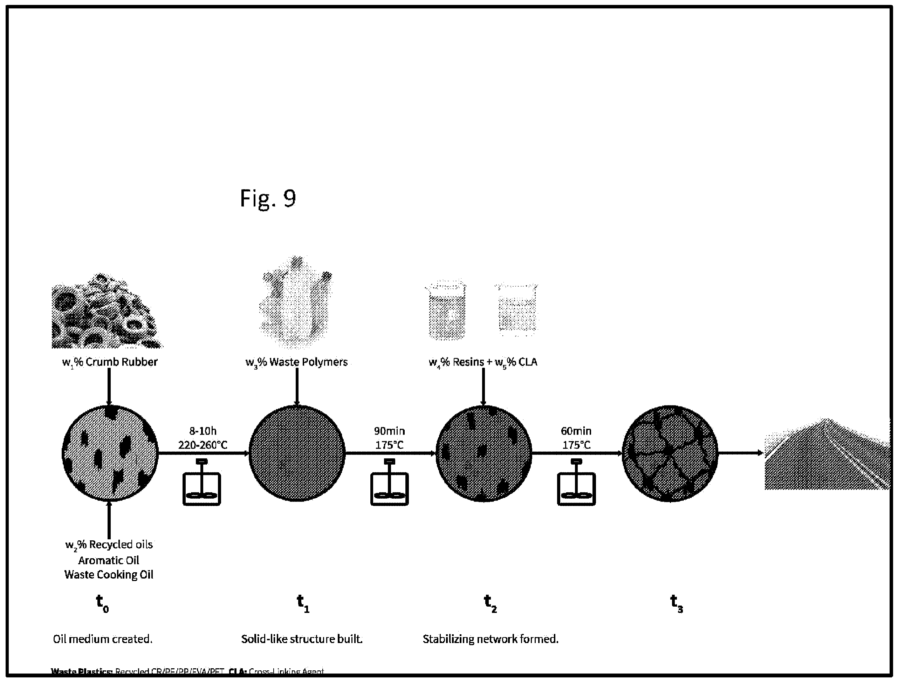

Figs. 1-9 show experimental details.

### DETAILED DESCRIPTION OF FIGURES

- Fig. 1: FTIR results of different types of crumb rubber-modified bitumen.
- Fig. 2: FTIR results of Artificial Binder and base bitumen.
- Fig. 3: Rutting parameter results of Crumb rubber modified bitumen and Artificial Binder.
- Fig. 4: Force-ductility results of different types of crumb rubber-modified bitumen and artificial bitumen.
- Fig. 5: Monotonic tensile test settings.
- Fig. 6: Monotonic tensile test results of different types of crumb rubber-modified bitumen and artificial bitumen.
- Fig. 7: ITSR test setup ((7a) vacuum; (7b) water bath @ 40°C for 72h, and press; calculation by using formula ITSR=ITS_{wet}/ITS_{dry} * 100.
- Fig. 8: ITSR test results of different types of crumb rubber-modified asphalt
- Fig. 9: In figure 9 steps of the present invention are shown.

Therein 3 mixing stages (instead of one or two) are used to control the creation of a stable AB.

In Stage 1, w₁% (preferably 30-50 wt.%) of CR is blended into w₂% (preferably 50% to 70% wt.%) of Recycled Oil at 220-260°C using a high shear mixer for 6-8h. Instead of wt.% it is also common to use 'parts'. In this particular case, in case w₁% would be 30 wt.%, this can be set as '1 part'. In case w₂% is 50 wt.%, the amount of recycled oil corresponds to 1.7 part. The purpose of Stage 1 is to fully dissolve CR into the Recycled Oils and create a flexible phase that serves as the liquid medium that supports the solid structure of the artificial bitumen.

In Stage 2, w₃% (preferably 20-40 by wt.% of the mixture in Stage 1) of Waste Polymer (e.g. any of or a combination of CR/PE/PP/EVA/PET) is blended into the mixture of Stage 1 at 175°C using a high shear mixer for 90 min. Instead of wt.% it is also common to use 'parts'. In case w3% is 20 wt.%, the amount corresponds to 0.67 part in view of w₁%, being 30 wt.%, which was set as '1 part'. The purpose of Stage 2 is to form a solid-like polymer network that gives structural integrity and stiffness to the bitumen.

In Stage 3, w₄% (preferably 10 wt.% of mixture in Stage 2) of Resin and w₅% (preferably 1.0 wt.% of mixture in Stage 2) of a Cross-Linker Agent is blended into the mixture of Stage 2 at 175°C using a high shear mixer for 60 min. The purpose of adding Resin is to improve the adhesive properties of the AB, while adding the Crosslinking Agent (CLA) ensures that the polymer network formed in Stage 2 is well dispersed and settled.

The proportion of the materials used can be tuned to fit the performance criteria required in the resulting AB.

### Examples

The chemical properties, high-temperature rutting resistance, low-temperature ductility, adhesive performance, and moisture durability of three types of crumb rubber-modified bitumen were evaluated. These crumb rubber-modified bitumens include fully dissolved crumb rubber modified bitumen (FDCRMB) with 22 wt% rubber content, undissolved crumb rubber modified bitumen (UDCRMB) with 22 wt% rubber content, and high content crumb rubber modified bitumen (HCRMB) containing 45 wt% rubber. Notably, in HCRMB, 30 wt% of the crumb rubber is fully dissolved in bitumen, while 15% remains undissolved. Instead of wt.% it is also common to use 'parts'. In this particular case, the amount of 30 wt.% dissolved crumb rubber is then set as '1 part', the amount of 15 wt.% undissolved crumb rubber is half of the amount in view of 30 wt.% and can thus be set as 0.5 part. Additionally, a crosslinking agent is incorporated into HCRMB.

For the artificial bitumen preparation, the process begins by heating 50 wt% waste oil, which consists of waste cooking oil and waste aromatic oil. In view of the above explanation of: "parts" in view of "wt.%", 50 wt.% of waste oil can, in view of 1 part dissolved crumb rubber, thus be set as 1.7 part of waste oil. Next, 25 wt% of crumb rubber is fully dissolved in the heated oil. Following this step, 10 wt% of waste plastic is dissolved in the previous mixture. Finally, 14.5% of waste and 0.5% of crosslinking agent are added to the mixture.

### Chemical characterization

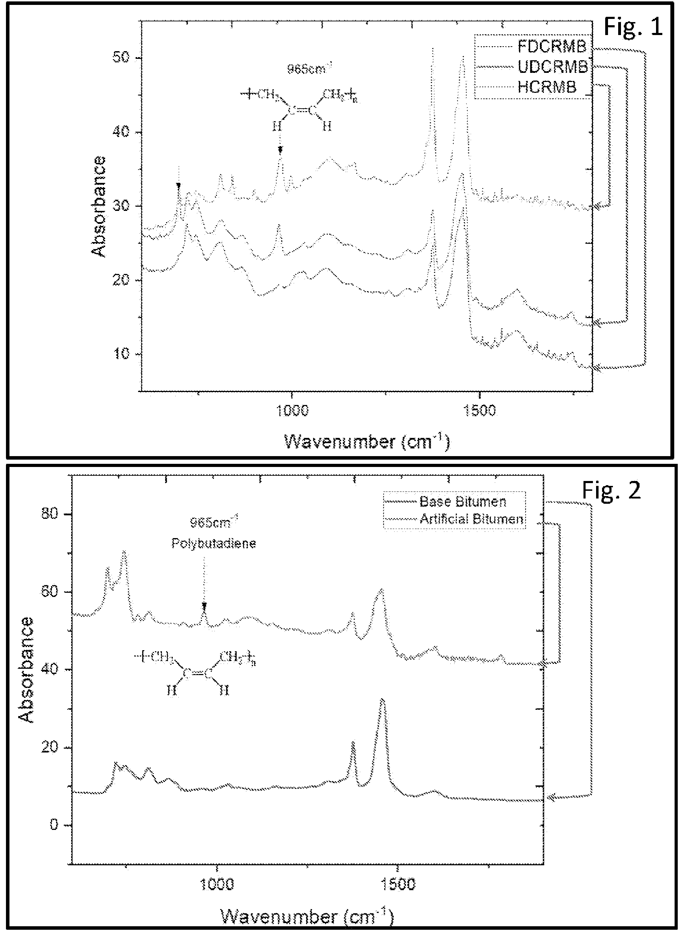

The results of the Fourier-transform infrared (FTIR) spectroscopy analysis are depicted in Fig. 1. A distinct peak at 965 cm-1 signifies the presence of the C=C bond, originating from the styrene-butadiene rubber (SBR) in the crumb rubber. The SBR is released during the degradation process of the crumb rubber. According to the literature, SBR has been shown to enhance the low-temperature and fatigue performance of bitumen. The figure illustrates that the 965 cm-1 peak for HCRMB is substantially more pronounced compared to those of UDCRMB and FDCRMB, suggesting a superior modification effect for HCRMB.

In Fig. 2, the FTIR spectroscopy results are presented, where the peak at 965 cm-1 indicates the C=C bond stemming from the polymer in the crumb rubber. It has been reported in the literature that the polymer can improve both high and low-temperature performance of bitumen. The figure demonstrates that the 965 cm-1 peak of AB is significantly higher than that of the base bitumen, indicating that the incorporation of crumb rubber into the AB formulation contributes to the enhanced performance of AB.

### High-temperature performance: Rutting resistance

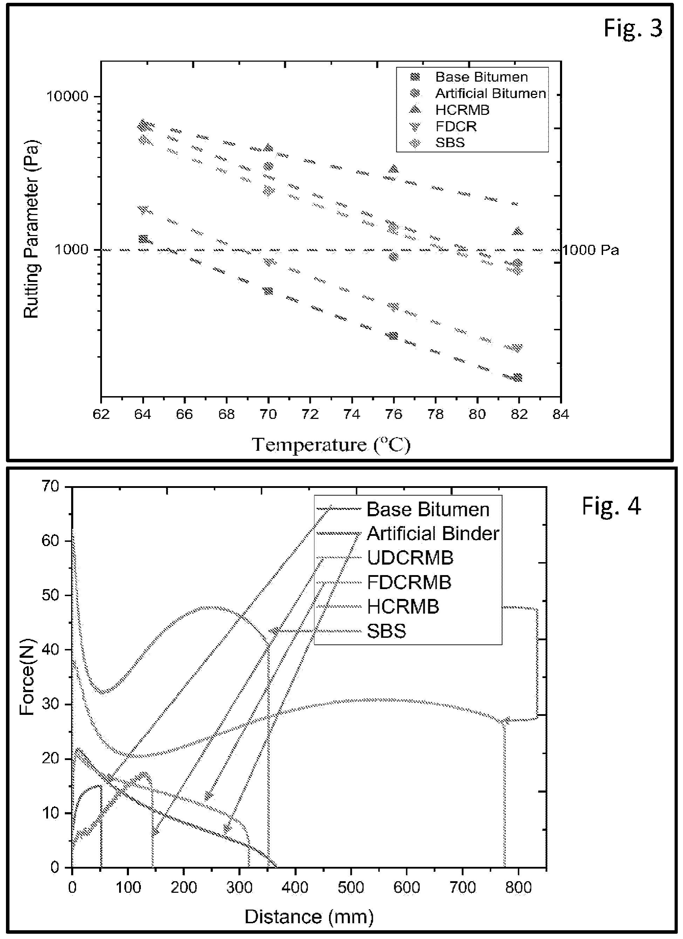

The rutting parameter of bitumen at elevated temperatures is a critical factor, as it dictates the pavement% ability to withstand rutting distress. To assess the rutting resistance of crumb rubber-modified bitumen, rutting parameters were characterized by using a dynamic shear rheometer (DSR) in the temperature range of 64°C to 82°C, with the results presented in Fig. 3.

As illustrated in Fig. 3, the rutting parameter for HCRMB is substantially higher than those of UDCRMB and FDCRMB and even surpasses the commercially available SBS-modified bitumen. This indicates that HCRMB possesses considerable high temperature rutting resistance, enabling it to resist rutting distress effectively. Similarly, the rutting parameter of AB is significantly higher than that of base bitumen and is on par with the commercially available SBS-modified bitumen. This suggests that AB also exhibits considerable high temperature rutting resistance, making it resistant to rutting distress.

### Low-temperature Performance: Ductility

The force-ductility test is essential as it provides insight into the pavement% cracking resistance at low temperatures. The force ductility test was performed for various types of crumb rubber-modified bitumen at 0°C, with the results displayed in Fig. 4.

As depicted in Fig. 4, the force-displacement curve of HCRMB is notably higher than those of UDCRMB and FDCRMB. This suggests that HCRMB not only exhibits greater ductility but can also withstand higher ductile forces. Moreover, it demonstrates that HCRMB possesses significant high temperature rutting resistance, rendering it resistant to rutting distress. In comparison, the force-displacement curve of AB is higher than that of base bitumen. This indicates that AB not only has increased ductility but can also endure higher ductile forces. Additionally, it demonstrates that AB offers considerable low-temperature cracking resistance.

### Adhesive performance: Pull-off strength

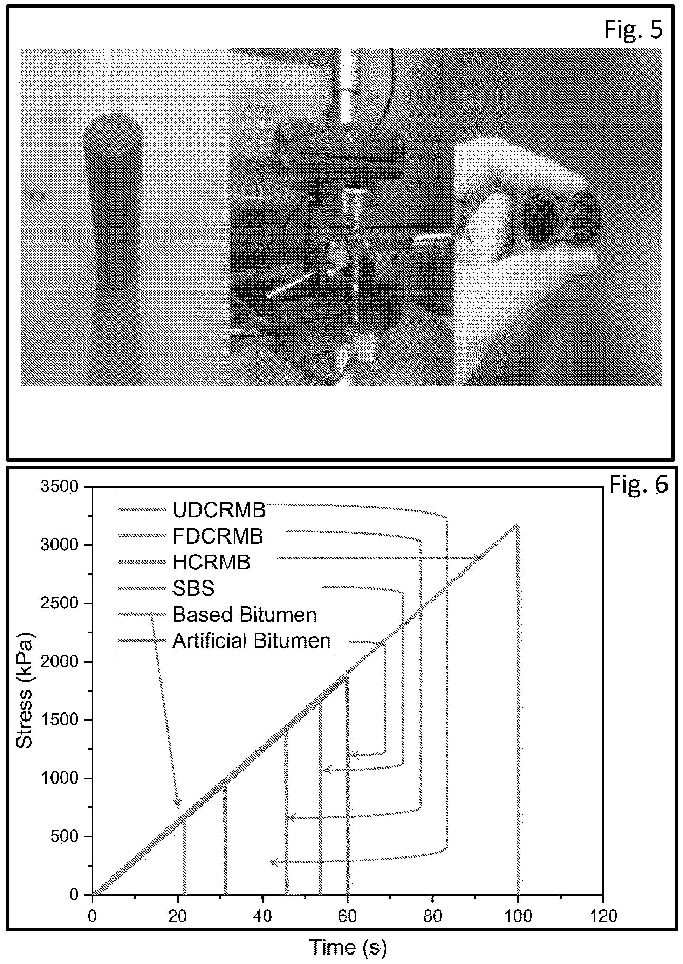

The pull-off strength of bitumen characterizes the adhesive performance between binder and aggregate, which serves as an indicator of the raveling risk in asphalt mixtures. Raveling is considered one of the most serious issues in the Netherlands, thus prompting concerns over pull-off strength. To evaluate the pull-off strength of crumb rubber-modified bitumen, a monotonic test was conducted using a Universal Testing Machine (UTM) at 15°C. The apparatus and settings can be observed in Fig. 5, while the results are presented in Fig. 6.

As illustrated in Fig. 6, the pull-off strength of HCRMB is significantly higher than those of UDCRMB and FDCRMB. This finding suggests that HCRMB exhibits superior adhesive performance with aggregate when compared to other crumb rubber-modified bitumen types. The pull-off strength of AB is considerably higher than that of base bitumen. This result indicates that AB provides notably improved adhesive performance with aggregate compared to base bitumen.

### Moisture durability: ITSR

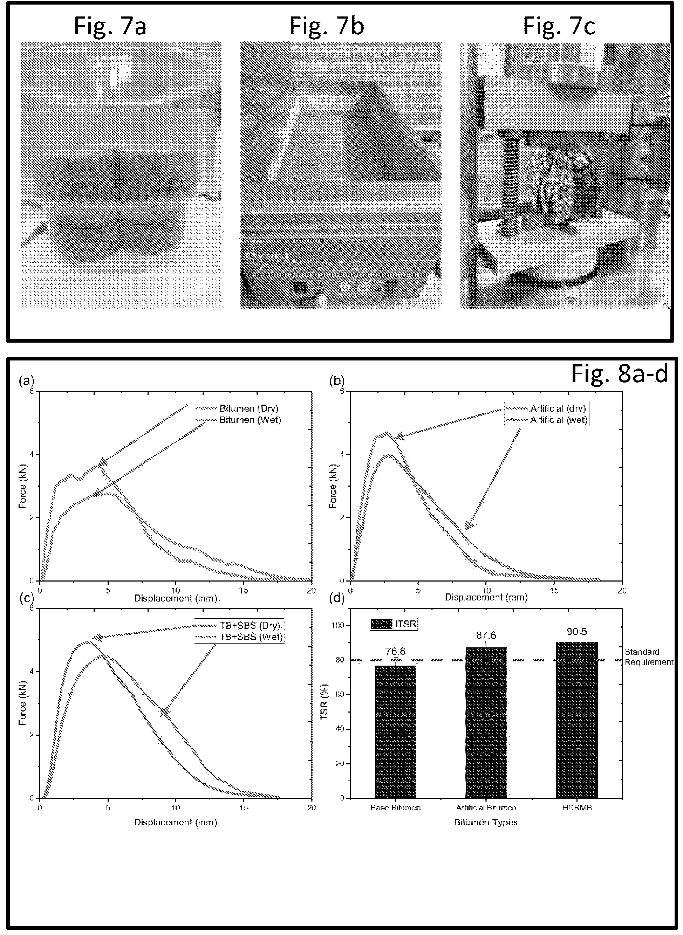

The moisture durability of bitumen is crucial, as it determines the pavement% service life durability. This is particularly relevant in the Netherlands, where frequent rainfall contributes to severe moisture damage. To evaluate the moisture durability of crumb rubber-modified asphalt, an indirect tensile ratio test (ITSR) was conducted using a UTM at 15°C. The apparatus and calculation formula are depicted in Fig. 7, while the results are presented in Fig. 8.

As shown in Fig. 8, the pull-off strength of HCRMB is significantly higher than that of base bitumen and the specification requirement (80%). This indicates that HCRMB exhibits superior moisture durability compared to base bitumen and the standard requirement. Furthermore, as demonstrated in Fig. 8, the pull-off strength of AB asphalt exceeds both the base bitumen and the specification requirement (80%). This result highlights that AB showcases markedly improved moisture durability compared to base bitumen asphalt.

## Claims

1. A bitumen-like material, comprising:
• 1,4-3,5 weight parts polymer and
• oil
wherein
• 1 first weight part of the polymer is dissolved, and in particular selected from polyisoprene, such as rubber, polyethylene, low density polyethylene, polyethylene terephthalate, ethylene vinyl acetate, and combinations thereof, and
• wherein 0,4-2,5 second weight parts of the polymer is in particular selected from polyisoprene, such as rubber, polyethylene, low density polyethylene, polyethylene terephthalate, ethylene vinyl acetate, and combinations thereof, and is undissolved and incorporated in the bitumen-like material and
• wherein the second weight part of polymer is in the form of particles, in particular wherein the average particle size of the second weight part of polymer is < 1 mm, in particular from 0.05-0.6 mm, more in particular 0.1-0.4 mm, and wherein a standard deviation of the particle size of the second weight part of polymer is 1 mm.

2. The bitumen-like material according to claim 1, wherein the bitumen-like material comprises 1-2.5 weight parts oil, wherein the oil is in particular recycled oil.

3. The bitumen-like material according to claim 1 or claim 2, wherein the bitumen-like material contains bitumen with a maximum mass fraction of 0.05 and no tar.

4. The bitumen-like material to any of claims 1-3, wherein the polymer is at least partly recycled polymer, such as 50-100% recycled polymer, in particular recycled from tires, from PE, from LDPE, from EVA, from PET, and combinations thereof, and/or wherein 0.5-2 weight parts of the polymer is incorporated in the bitumen-like material, in particular 0.7-1.5 weight parts, more in particular 1-1.4 weight parts.

5. The bitumen-like material according to any of claims 1-4, wherein the bitumen-like material further comprises 10-40 weight parts fine aggregate, such as sand, and/or 10-40 weight parts coarse aggregate, in particular selected from stone, such as limestone, basalt, and pebbles.

6. The bitumen-like material according to any of claims 1-5, further comprising
0.1-0.5 weight parts of at least one resin, and
0.05-0.3 weight parts of at least one cross linker,
in particular wherein the at least one resin is selected from terpene comprising resins, rosins, hydrocarbon resins, such as C₄-C₁₂ resins, preferably C₅-C₁₀ resins, more preferably C₆-C₉ resins, most preferably C₈-C₉ resins, and petroleum derived resins, in particular recycled resins.

7. The bitumen-like material according to claim 6, wherein the at least one cross-linker is selected from sulphur-comprising compounds, from sulphur, such as nanoparticle sulphur, and from isocyanate.

8. The bitumen-like material according to any of claims 6-7, wherein the recycled oil is selected from paper industry oil, rapeseed oil, aromatic oil, such as synthetic or natural aromatic oil, and soybean oil.

9. The bitumen-like material according to any of claims 6-8, wherein all components of the artificial bitumen-like material are recycled components, apart from the cross-linker.

10. Use of the bitumen-like material according to any of claims 1-9, for replacing bitumen-based base material as at least one of a basic component for building material and a finished building material.

11. A method of producing a bitumen-like material according to any of claims 6-9, comprising:
• Providing the polymer, in particular wherein the polymer is selected from polyisoprene, such as rubber, polyethylene, low density polyethylene, polyethylene terephthalate, ethylene vinyl acetate, and combinations thereof, wherein the polymer is in the form of particles, in particular 1 weight part;
• Providing recycled oil, in particular 1-2.5 weight parts, in particular wherein the recycled oil is selected from paper industry oil, rapeseed oil, aromatic oil, such as synthetic or natural aromatic oil, soybean oil, and combinations thereof;
• Blending the polymer and recycled oil at a temperature of 220-260°C in a first high shear mixer under a first shear for 0.5-2 hours, therewith forming a single homogeneous phase comprising a substantially fully dissolved polymer in the recycled oil;
• Adding further polymer to the single homogeneous phase in a second high shear mixer during 0.5-2 hours, in particular wherein the polymer is selected from polyisoprene, such as rubber, polyethylene, low density polyethylene, polyethylene terephthalate, ethylene vinyl acetate, and combinations thereof, wherein the further polymer is in the form of particles, in particular 0.4-1.4 weight parts, lowering the temperature to 170-200 °C, during a period of 0.5-2 hours, wherein the further polymer remains substantially undissolved in the phase, therewith forming a fluidic mixture with increased stiffness and high-temperature stability, in particular forming a polymeric network;
• Adding at least one resin to the fluidic mixture, in particular 0.1-0.5 weight parts of at least one resin, and at least one cross linker, in particular 0.005-0.3 weight parts of at least one cross linker, in a third high shear mixer for 0.5-2 hours, maintaining the temperature at 170-200°C, during a period of 0.5-2 hours, therewith forming an artificial bitumen-like material.

12. The method of producing an artificial bitumen-like material according to claim 11, wherein the phase has a viscosity of 0.3-4.0 Pa*S at 180°C.

13. The method of producing an artificial bitumen-like material according to any of claims 11-12, wherein the first high shear mixer operates at a speed of 400-600 rpm and/or wherein the second high shear mixer operates at a speed of 400-600 rpm and/or wherein the third high shear mixer operates at a speed of 400-600 rpm.

14. A method of producing a high content polymer modified bitumen-like material (HCRMB) according to any of claims 1-5, comprising:
• Providing the polymer, in particular wherein the polymer is selected from polyisoprene, such as rubber, polyethylene, low density polyethylene, polyethylene terephthalate, ethylene vinyl acetate, and combinations thereof, wherein the polymer is in the form of particles, in particular 1 weight part;
• Providing bitumen-like material, in particular 1-4 weight parts;
• Blending the polymer and bitumen-like material at a temperature of 220-260 °C in a fourth high shear mixer under a fourth shear for 6-8 hours, therewith forming a single homogeneous phase comprising a substantially fully dissolved polymer in bitumen-like material;
• Adding further polymer in a fifth high shear mixer, in particular wherein the polymer is selected from polyisoprene, such as rubber, polyethylene, low density polyethylene, polyethylene terephthalate, ethylene vinyl acetate, and combinations thereof, wherein the polymer is in the form of particles, in particular 0.25-3 weight parts, lowering the temperature to 170-200 °C, during a period of 0.5-2 hours, wherein the further polymer remains substantially undissolved in the phase, therewith forming a HCRMB.

15. The method of producing a high content polymer modified bitumen-like material according to claim 14, wherein the phase has a viscosity of 0.3-4.0 Pa*sec at 180°C.

16. The method of producing a high content polymer modified bitumen-like material according to any of claims 14-15, wherein the fourth high shear mixer operates at a speed of 3000-9000 rpm, and/or wherein the fifth high shear mixer operates at a speed of 3000-9000 rpm.

17. A product comprising bitumen-like material according to any of claims 1-9, wherein the product is selected from a road pavement, a shingle for roofing, a waterproofing, a surfacing material, and an insulating material.

18. A road pavement comprising asphalt and the bitumen-like material according to any of claims 1-9, comprising 5-30 wt.% bitumen-like material, and 65-95 wt.% mineral aggregate.
